# EUROPEAN PATENT APPLICATION

(11) **EP 4 102 821 A1**
(43) Date of publication of application: **14.12.2022**
(21) Application number: 21754126.7
(22) Date of filing: 09.02.2021
(51) Int. Cl.: H04N 5/232, H04N 5/77

(54) **METHOD FOR GENERATING PLURALITY OF CONTENT ITEMS AND ELECTRONIC DEVICE THEREFOR**

(30) Priority: 10.02.2020 KR 20200015957
(71) Applicant: Samsung Electronics Co., Ltd., Gyeonggi-do 16677 (KR)
(72) Inventor: HWANG, Taehee, Suwon-si Gyeonggi-do 16677 (KR); KIM, Jiyoun, Suwon-si Gyeonggi-do 16677 (KR); SHEEN, Saebyuk, Suwon-si Gyeonggi-do 16677 (KR); LEE, Jaehan, Suwon-si Gyeonggi-do 16677 (KR); CHOI, Nari, Suwon-si Gyeonggi-do 16677 (KR); KI, Daehong, Suwon-si Gyeonggi-do 16677 (KR); KIM, Jaein, Suwon-si Gyeonggi-do 16677 (KR); MA, Chohyang, Suwon-si Gyeonggi-do 16677 (KR); PARK, Miji, Suwon-si Gyeonggi-do 16677 (KR); UM, Taewon, Suwon-si Gyeonggi-do 16677 (KR); LEE, Jonghoon, Suwon-si Gyeonggi-do 16677 (KR); LIM, Dongkyu, Suwon-si Gyeonggi-do 16677 (KR); LIM, Yujin, Suwon-si Gyeonggi-do 16677 (KR); CHOI, Yoonjung, Suwon-si Gyeonggi-do 16677 (KR); CHOI, Jungwoo, Suwon-si Gyeonggi-do 16677 (KR)
(74) Representative: HGF
(86) International application number: PCT/KR2021/001684
(87) International publication number: WO 2021/162396

(57) **Abstract**

According to various embodiments, disclosed is an electronic device including at least one camera, and a processor operatively coupled to the at least one camera, wherein the processor acquires data for a designated time using the at least one camera, and generates a plurality of contents based on the acquired data, and at least one content of the plurality of the contents has a different type. Besides, various embodiments obtained from the specification are possible.

## Description

### [Technical Field]

Various embodiments of the present disclosure relate to a technique for generating a plurality of contents based on a photo and a video captured using at least one camera included in an electronic device.

### [Background Art]

An electronic device such as a smart phone may take a photo or a video using at least one camera. For example, the electronic device may select any one of various modes (e.g., a photo mode and a video mode) to capture a subject. Also, the electronic device may store the captured data (e.g., image data or video data) according to the selected mode (e.g., a photo mode or a video mode).

### [Disclosure of Invention]

### [Technical Problem]

An electronic device (e.g., a smart phone) may set a photographing mode of a camera to a photo mode or a video mode to capture a subject as a picture or a video and thus acquire data according to different photographing modes.

If the electronic device intends to take both a photo and a video of a subject, it may take the photo by setting the photographing mode of the camera to the photo mode and then take the video by changing the photographing mode of the camera to the video mode.

However, to take a photo of the subject for a designated time and to additionally acquire a video corresponding to the photo, the electronic device may acquire the video corresponding to the photo taken for the designated time only by repeating an action performed by the subject for the designated time. Moreover, the electronic device may acquire a video similar to the photo taken for the designated time based on the repeated action of the subject but may not acquire the video exactly corresponding to the photo.

The electronic device may generate another photo (e.g., a panoramic photo or a moving photo) based on the photo taken during the designated time. For example, if taking a plurality of photos during the designated time, the electronic device may generate a moving photo by connecting the plurality of the photos. However, generating such a photo may demand inconvenience of using a separate editing program from a user. In addition, generating such a photo may require repeated photographing (e.g., pressing a shooting button) from the user.

In addition, it may be difficult for a general user (e.g., an inexperienced photographer, a patient with tremor, or a person with low vision) who is not a professional photographer to take a photo by applying a photographing scene condition (e.g., an illumination, a shutter speed, or a filter effect).

Various embodiments disclosed in this document are to provide a method for generating a plurality of contents having different types of at least one content during a designated time, if capturing a subject in one photographing mode (e.g., a single take mode) for the designated time, and an electronic device thereof.

### [Solution to Problem]

An electronic device according to an embodiment disclosed in this document, may include at least one camera; and a processor operatively coupled to the at least one camera; the processor may acquire data for a designated time using the at least one camera, and generate a plurality of contents based on the acquired data, and at least one content of the plurality of the contents may have a different type.

In addition, a method for generating a plurality of contents according to an embodiment disclosed in this document, may include acquiring data for a designated time using at least one camera; and generating a plurality of contents based on the acquired data, and at least one content of the plurality of the contents may have a different type.

### [Advantageous Effects of Invention]

According to various embodiments of the present disclosure, a method for generating a plurality of contents and an electronic device thereof may capture a subject for a designated time, and thus obtain corresponding data (e.g., image data and video data) under the same condition (e.g., an action of the subject or a surrounding environment of the subject).

In addition, according to various embodiments disclosed in this document, a method for generating a plurality of contents and an electronic device thereof may capture a subject for a designated time in one photographing mode (e.g., a single take mode), and thus a user may not always press a shooting button and may automatically generate an optimal content (e.g., a panoramic photo, a moving photo, or a slow motion video) of the subject which may be missed if the user manually photographs.

In addition, according to various embodiments disclosed in this document, a method for generating a plurality of contents and an electronic device thereof may generate at least one data among a plurality of data (e.g., image data and video data) captured for a designated time as a content of a different type, and thus provide a user with various contents (e.g., a panoramic photo, a moving photo, and a slow motion video).

In addition, according to various embodiments disclosed in this document, a method for generating a plurality of contents and an electronic device thereof may allow a user to photograph for a designated time merely with an action of holding the electronic device toward a subject, and thus allow a general user (e.g., an inexperienced photographer, a patient with tremor, or a person with low vision) who is not a professional photographer to generate various contents (e.g., a panoramic photo, a moving photo and a slow motion video).

Besides, various effects directly or indirectly obtained through this document may be provided.

### [Brief Description of Drawings]

FIG. 1 is a block diagram of an electronic device in a network environment according to various embodiments.
FIG. 2 is a block diagram of a camera module according to various embodiments.
FIG. 3 is a diagram illustrating a hardware configuration of an electronic device according to an embodiment.
FIG. 4 is a diagram illustrating data reception of a memory based on time according to an embodiment.
FIG. 5 is a diagram illustrating a method for generating a plurality of contents according to an embodiment.
FIG. 6 is a diagram illustrating user interfaces outputted on a display of an electronic device according to an embodiment.
FIG. 7 is a diagram illustrating user interfaces outputted on a display of an electronic device according to an embodiment.
FIG. 8 is a diagram illustrating a user interface outputted on a display of an electronic device according to an embodiment.
FIG. 9 is a diagram illustrating a data extraction method of an electronic device according to an embodiment.
FIG. 10 is a diagram illustrating user interfaces outputted on a display of an electronic device according to an embodiment.
FIG. 11 is a diagram illustrating user interfaces outputted on a display of an electronic device according to an embodiment.
FIG. 12 is a diagram illustrating camera arrangement of an electronic device according to various embodiments.
FIG. 13 is a diagram illustrating camera arrangement of an electronic device and user interfaces outputted on a display according to various embodiments.

In regard to descriptions of the drawings, the same or similar reference numbers may be used for the same or corresponding components.

### [Best Mode for Carrying out the Invention]

Hereinafter, various embodiments of the present invention will be described with reference to the accompanying drawings. However, it should be understood that it is not intended to limit the present invention to a specific embodiment, and various modifications, equivalents, and/or alternatives of the embodiments of the present invention are embraced.

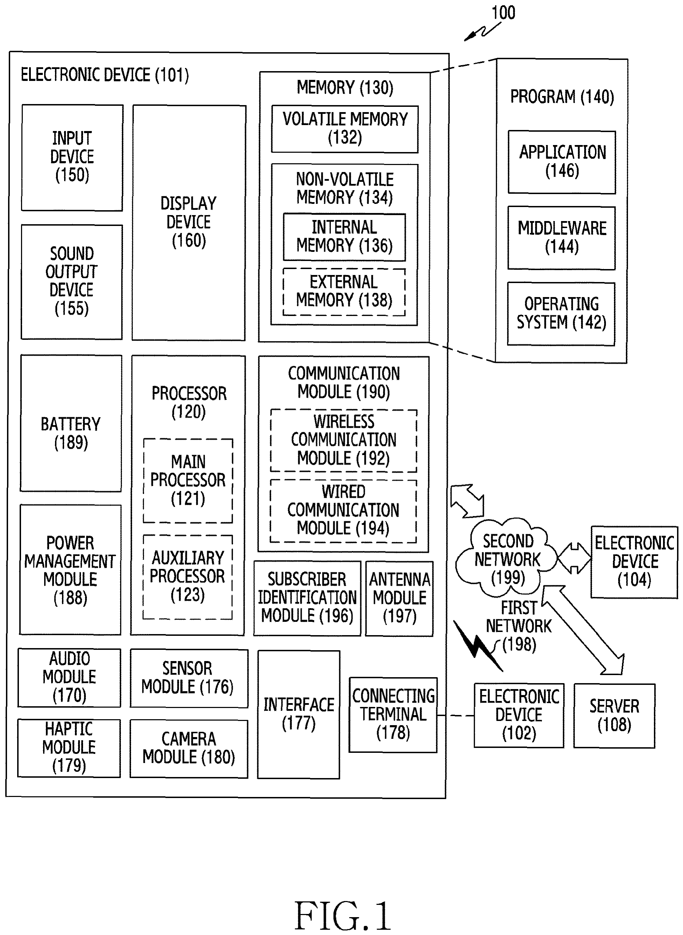

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

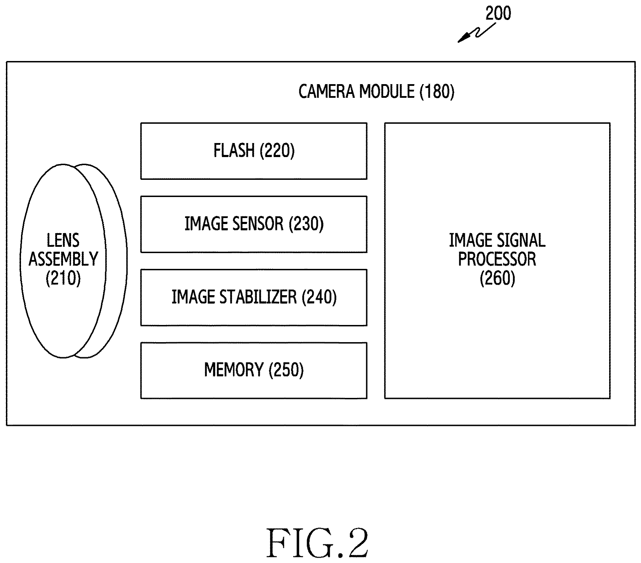

Fig. 2 is a block diagram illustrating the camera module according to various embodiments.

Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

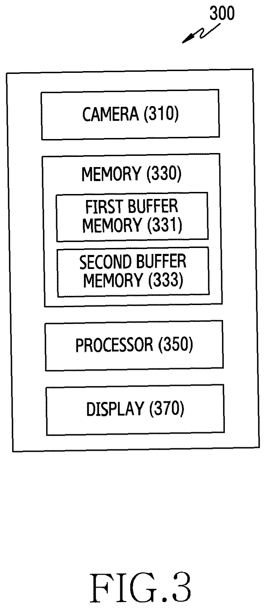

FIG. 3 is a diagram illustrating a hardware configuration of an electronic device according to an embodiment.

Referring to FIG. 3, if photographing for a designated time, an electronic device 300 according to an embodiment may generate a plurality of contents in which at least one content has a different type (e.g., a panoramic photo, a moving photo, or a slow motion video). In an embodiment, the electronic device 300 may acquire data (e.g., image data and video data) of different types for the designated time. In an embodiment, the electronic device 300 may store data satisfying a designated condition (e.g., an expression of a subject, a gesture of a subject, a movement of a subject and an aesthetic criterion) among the different data. In an embodiment, the electronic device 300 may store data for each scene projected on a camera 310 even if the designated condition (e.g., an expression of a subject, a gesture of a subject, a movement of a subject and an aesthetic criterion) is not satisfied. For example, if satisfying the photographing condition (e.g., an illuminance), the electronic device 300 may store data (e.g., image data and video data) of different types.

According to an embodiment, the electronic device 300 may include at least one of the camera 310, a memory 330, a processor 350 and a display 370.

According to an embodiment, the camera 310 (e.g., the camera module 180 of FIG. 2) may perform a photographing function according to a photographing mode (e.g., a photo mode, a video mode or a single take mode). In an embodiment, if capturing a subject according to a designated photographing mode (e.g., a single take mode), the camera 310 may obtain data (e.g., image data, video data) of different types related to the subject for a designated time (e.g., 15 seconds). As another example, if capturing a subject according to a designated photographing mode (e.g., a single take mode), the camera 310 may obtain at least one data (e.g., image data or video data) related to the subject for a designated time (e.g., 15 seconds). In an embodiment, if satisfying a designated condition (e.g., an expression of a subject, a gesture of a subject, a movement of a subject and an aesthetic criterion), the camera 310 may obtain at least one data (e.g., image data or video data) among data of different types (e.g., image data and video data). As another example, the electronic device 300 may store data per scene projected on the camera 310 even if the designated condition (e.g., an expression of a subject, a gesture of a subject, a movement of a subject and an aesthetic criterion) is not satisfied.

According to various embodiments, the camera 310 (e.g., the camera module 180 of FIG. 2) may perform the photographing function through an external accessory (e.g., a smartphone gimbal). For example, if the external accessory is connected to the electronic device 300, the camera 310 may capture the subject in a designated photographing mode (e.g., a single take mode) according to photographing function setting (e.g., a shooting start input) of the connected external accessory.

According to various embodiments, the camera 310 (e.g., the camera module 180 of FIG. 2) may be replaced or utilized as a camera (e.g., a digital camera) of an external electronic device operatively connected with the electronic device 300. For example, if the camera of the external electronic device is operatively connected to the electronic device 300, the camera 310 does not acquire separate data (e.g., image data or video data), but may obtain data (e.g., image data or video data) through the camera of the external electronic device. In this case, the electronic device 300 may generate a plurality of contents (e.g., a panoramic photo, a moving photo and a slow motion video) based on the data acquired through the camera of the external electronic device. In various embodiments, the electronic device 300 may additionally acquire data (e.g., image data or video data) by utilizing other electronic device operatively connected, and generate various contents (e.g., a panoramic photo, a moving photo and a slow motion video) based on both the data (e.g., image data or video data) acquired through other electronic device and the data (e.g., image data or video data) acquired through the electronic device 300. In this case, the other electronic device may perform the photographing function for the same designated time as the electronic device 300.

According to an embodiment, the memory 330 (e.g., the memory 250 of FIG. 2) may separately store the data (e.g., image data and video data) of different types acquired through the camera 310. For example, if the subject is captured for a designated time (e.g., 15 seconds) according to a designated photographing mode (e.g., a single take mode), the memory 330 may store image data related to the subject in a first buffer memory 331, and store video data related to the subject in a second buffer memory 333. In an embodiment, the memory 330 may store data (e.g., image data) of one timing (e.g., 3 seconds) of the designated time (e.g., 15 seconds) in the first buffer memory 331, and store data (e.g., video data) of one period (e.g., 2 through 4 seconds) including the one timing (e.g., 3 seconds) in the second buffer memory 333.

According to an embodiment, the processor 350 may generate a plurality of contents based on data of different types (e.g., image data and video data) acquired using the camera 310.

According to an embodiment, the processor 350 may cause the camera 310 to acquire at least one of image related data and video related data according to a designated time. For example, if a length of the designated time is a first length (e.g., less than 15 seconds), the processor 350 may cause the camera 310 to acquire the image related data. In this case, the processor 350 may generate a plurality of contents (e.g., a panoramic photo, a moving photo) based on the image data acquired for the time of the first length (e.g., less than 15 seconds). In addition, if the length of the designated time is the first length (e.g., less than 15 seconds), the processor 350 may obtain video data of the length corresponding to the time of the first length from the camera 310, and stores it as an original video. In this case, the processor 350 may further store a fast forward video in which a playback speed of the original video is set to be faster. As another example, if the length of the designated time is a second length (e.g., 15 seconds or more), the processor 350 may cause the camera 310 to acquire the image related data and the video related data. In this case, the processor 350 may generate a plurality of contents (e.g., a panoramic photo, a moving photo, a slow motion video) based on the video data acquired for the time of the second length (e.g., 15 seconds or more). In addition, if the length of the designated time is the second length (e.g., 15 seconds or more), the processor 350 may obtain the video data of the length corresponding to the time of the second length from the camera 310, and store it as an original video. In an embodiment, the processor 350 may generate contents in a different number according to the length of the designated time. For example, the processor 350 may generate more contents based on the data acquired for the time of the second length (e.g., 15 seconds or more) than the contents based on the data acquired for the time of the first length (e.g., less than 15 seconds).

According to an embodiment, if satisfying a designated condition (e.g., an expression of a subject, a gesture of a subject, a movement of a subject and an aesthetic criterion), the processor 350 may cause the camera 310 to acquire at least one data (e.g., image data or video data) among data of different types (e.g., image data and video data). As another example, the electronic device 300 may store data per scene projected on the camera 310 even if not satisfying the designated condition (e.g., an expression of a subject, a gesture of a subject, a movement of a subject and an aesthetic criterion). In an embodiment, the processor 350 may set a data acquisition condition of the camera 310 to recognizing a designated expression (e.g., a smiling expression) of a subject (e.g., a person or an animal). In an embodiment, the processor 350 may set the data acquisition condition of the camera 310 to recognizing a designated gesture (e.g., a hand gesture) of the subject (e.g., a person or an animal). In an embodiment, the processor 350 may set the data acquisition condition of the camera 310 to changing a movement of the subject (e.g., a person or an animal) over a designated change rate (e.g., a movement from one location to another location). In an embodiment, the processor 350 may set the data acquisition condition of the camera 310 to at least one criterion of frame clarity, exposure, colorfulness, composition and expression.

According to an embodiment, the processor 350 may recognize a subject corresponding to a product (or a person) in at least one content (e.g., a panoramic photo, a moving photo, or a slow motion video) among a plurality of contents (e.g., a panoramic photo, a moving photo, and a slow motion video). In an embodiment, if the recognized subject is the product (or a person), the processor 350 may display an information value (e.g., an Internet address) related to the product (or person) in at least one content (e.g., a panoramic photo, a moving photo or a slow motion video). In an embodiment, the processor 350 may not cause the display 370 to display the related information value, which is limited to the above-described example, but may cause the display 370 to display various information values (e.g., a location related to a background of the subject) related to an element (e.g., a background of the subject) recognized through the camera 310.

According to an embodiment, the processor 350 may set the data acquisition condition of the camera 310 based on at least one content (e.g., a panoramic photo, a moving photo or a slow motion video) pre-generated. For example, if recognizing an expression (e.g., a smiling expression) and a gesture (e.g., a hand gesture) of the subject (e.g., a person or an animal) in the plurality of the pre-generated contents (e.g., a panoramic photo, a moving photo or a slow motion video), the processor 350 may set the data acquisition condition of the camera 310 to recognizing the expression (e.g., a smiling expression) and the gesture (e.g., a hand gesture). In an embodiment, the processor 350 may set the data acquisition condition of the camera 310 based on at least one content (e.g., a panoramic photo, a moving photo or a slow motion video) stored in the memory 330. In an embodiment, the processor 350 does not set the data acquisition condition of the camera 310 as it is limited to the above-described example, and may set the data acquisition condition of the camera 310 according to various conditions related to the content (e.g., a panoramic photo, a moving photo or a slow motion video).

According to an embodiment, the processor 350 may set the data acquisition condition of the camera 310 by reflecting a user's image or video preference. In an embodiment, the processor 350 may analyze the user's image or video preference from an application program (e.g., Instagram or Facebook) related to storing the image or the video. In an embodiment, if a specific expression (e.g., a smiling expression) and a specific gesture (e.g., a hand gesture) are recognized in an image or a video stored in the application program, the processor 350 may set the specific expression (e.g., a smiling expression) to a designated expression, and set the specific gesture (e.g., a hand gesture) to a designated gesture. In an embodiment, the processor 350 is limited to the above-described example in setting the data acquisition condition of the camera 310, and may set the data acquisition condition of the camera 310 according to various conditions related to the content (e.g., a panoramic photo, a moving photo or a slow motion video).

According to an embodiment, if the subject (e.g., a person or an animal) recognized through the camera 310 does not satisfy the designated condition, the processor 350 may display a guide phrase through the display 370. In an embodiment, if the subject (e.g., a person or an animal) recognized through the camera 310 is not with the designated expression (e.g., a smiling expression), the processor 350 may cause the display 370 to display the guide phrase (e.g., "Smile") related to the designated expression (e.g., a smiling expression). In an embodiment, if the subject (e.g., a person or an animal) recognized through the camera 310 is not with the designated gesture (e.g., a hand gesture), the processor 350 may cause the display 370 to display the guide phrase (e.g., "Raise your hand") related to the designated gesture (e.g., a hand gesture). In an embodiment, if the subject (e.g., a person or an animal) recognized through the camera 310 does not change over the designated movement change rate (e.g., moving from one location to another location), the processor 350 may cause the display 370 to display the guide phrase (e.g., "Jump more than 1 m") related to the designated movement change rate (e.g., moving from one location to another location). In an embodiment, the processor 350 may cause the display 370 to display the guide phrase (e.g., "Move slowly according to the moving speed of the camera.") related to a moving speed of the subject according to the moving speed of the subject. In an embodiment, the processor 350 may cause the display 370 to display the guide phrase (e.g., "Move slowly according to the moving speed of the subject") related to the moving speed of the camera 310 according to the moving speed of the camera 310. In an embodiment, the processor 350 is not limited to the above-described example in causing the display 370 to display the related guide phrase, and may cause the display 370 to display various guide phrases related to an element recognized through the camera 310.

According to various embodiments, if the photographing function of the camera 310 is terminated (e.g., press home key or press back key) while acquiring data (e.g., image data or video data) through the camera 310, the processor 350 may determine whether to generate a plurality of contents (e.g., a panoramic photo, a moving photo or a slow motion video). In various embodiments, if the photographing function of the camera 310 is terminated during the shooting, if its end time satisfies a designated time (e.g., 10 seconds), the processor 350 may generate a plurality of contents (e.g., a panoramic photo, a moving photo and a slow motion video), and perform a function (e.g., outputting a home screen or outputting a screen before the photographing function) according to the termination of the photographing function. In various embodiments, if the photographing function of the camera 310 is terminated during the shooting, if the end time does not satisfy the designated time (e.g., 10 seconds), the processor 350 may not generate a plurality of contents (e.g., a panoramic photo, a moving photo and a slow motion video), and may perform the function according to the termination of the photographing function (e.g., outputting a home screen or outputting a screen before the photographing function).

According to an embodiment, the display 370 may arrange and display the plurality of the contents (e.g., a panoramic photo, a moving photo and a slow motion video) generated by the processor 350 in a plurality of display areas. In an embodiment, the display 370 may arrange a content of a different type (e.g., a slow motion video) in at least one of the plurality of the display areas. In this case, the display 370 may arrange the content (e.g., a moving photo) of the different type from the contents of the other types in other display area than at least one display area of the plurality of the display areas.

According to an embodiment, the display 370 may display one main content (e.g., a slow motion video) of a plurality of contents (e.g., a panoramic photo, a moving photo, and a slow motion video) in some display area (e.g., top) of a plurality of display areas. In addition, the display 370 may display a plurality of sub contents (e.g., a panoramic photo and a moving photo) among the plurality of the contents (e.g., a panoramic photo, a moving photo and a slow motion video) in other display area (e.g., bottom) than some display area among the plurality of the display areas. In this case, the display 370 may set the area in which the main content (e.g., a slow motion video) is arranged and the area in which the sub contents (e.g., a panoramic photo and a moving photo) are arranged in identical or similar rates, and area of the sub contents (e.g., a panoramic photo and a moving photo) may be divided as many as the sub contents.

According to various embodiments, the display 370 may arrange the plurality of the contents (e.g., a panoramic photo, a moving photo and a slow motion video) generated by the processor 350 in a plurality of display areas according to an arrangement condition. In various embodiments, the display 370 may arrange a content satisfying the most conditions among designated conditions such as a subject expression, a subject gesture, a subject movement and an aesthetic criterion in a first area of the divided areas. In various embodiments, the display 370 may arrange a content satisfying the second most conditions following the content satisfying the most conditions in a second area of the divided areas. In various embodiments, the display 370 may arrange the most recently acquired data (e.g., image data or video data) among the data of the different types (e.g., image data and video data) acquired through the camera 310 in the last area of the divided areas. In various embodiments, the display 370 may arrange the plurality of the contents in the plurality of the display areas according to an additional arrangement condition such as color contrast (e.g., color and black and white), backgrounds differently recognized, a data type (e.g., a photo and a video), and a data aspect ratio.

In various embodiments, the electronic device 300 may be various electronic devices (e.g., a smart phone, a laptop, a wearable device, an augmented reality (AR) device, or a virtual reality (VR) device) including the camera 310, and may obtain different data (e.g., image data and video data) and generate various contents (e.g., a panoramic photo, a moving photo and a slow motion video) using at least one of the various electronic devices.

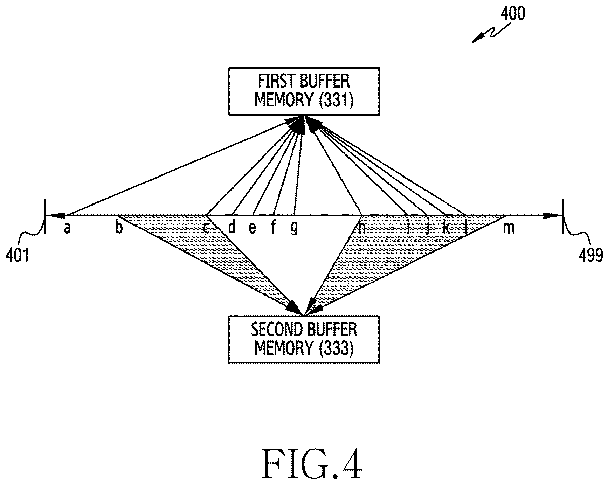

FIG. 4 is a diagram 400 illustrating data reception of a memory based on time according to an embodiment.

Referring to FIG. 4, the memory (e.g., the memory 330 of FIG. 3) according to an embodiment may classify data acquired through a camera (e.g., the camera 310 of FIG. 3) based on time into data of different types (e.g., image data, video data) and store them in a first buffer memory 331 and a second buffer memory 333.

According to an embodiment, the first buffer memory 331 (e.g., the first buffer memory 331 of FIG. 3) may store a plurality of image data between a start point 401 of a designated time and an end point 499 of the designated time. In an embodiment, the first buffer memory 331 may store image data including a subject (e.g., a person or an animal) of a designated expression (e.g., a smiling expression) at a timing a. In an embodiment, the first buffer memory 331 may store image data including a subject (e.g., a person or an animal) of a designated gesture (e.g., a hand gesture) at a timing c, a timing d, a timing e, a timing f, and a timing g. In this case, the first buffer memory 331 may provide the image data of the timing c through the timing g to the processor 350 to generate a content corresponding to a panoramic photo by the processor (e.g., the processor 350 of FIG. 3). In an embodiment, the first buffer memory 331 may store image data including a subject (e.g., a person or an animal) which changes over a designated movement change rate (e.g., moving from one location to another location) at a timing h, a timing i, a timing j, a timing k, and a timing 1. In this case, the first buffer memory 331 may provide the image data of the timing h through the timing 1 to the processor 350 to generate a content corresponding to a moving photo by the processor 350. As another example, the first buffer memory 331 may store image data at a timing which satisfies a photographing environment (e.g., illuminance) in the timing a through the timing 1 and the data storage condition is not limited to the above-described example.

According to an embodiment, the second buffer memory 333 (e.g., the second buffer memory 333 of FIG. 3) may store a plurality of video data between the start point 401 of the designated time and the end point 499 of the designated time. In an embodiment, the second buffer memory 333 may store the video data including the subject (e.g., a person or an animal) between the timing b and the timing c. In this case, the second buffer memory 333 may provide the video data between the timing b and the timing c to the processor 350 to generate a content corresponding to a video including the subject (e.g., a person or an animal) by the processor (e.g., the processor 350 of FIG. 3). In an embodiment, the second buffer memory 333 may store video data including the subject (e.g., a person or an animal) which changes over the designated movement change rate (e.g., moving from one location to another location) between the timing h and the timing m. In this case, the second buffer memory 333 may provide the video data between the timing h and the timing m to the processor 350 to generate a content corresponding to a slow motion video by the processor 350. In an embodiment, the second buffer memory 333 may store the video data corresponding to the image data of the first buffer memory 331 in a period (e.g., the timing h through the timing m) including the image data collection period (e.g., the timing h, the timing i, the timing j, the timing k and the timing 1) of the first buffer memory 331. Hence, the memory (e.g., the memory 330 of FIG. 3) may store both the image data and the video data in a specific period (e.g., the period between the timing h and the timing 1), and provide them to the processor 350.

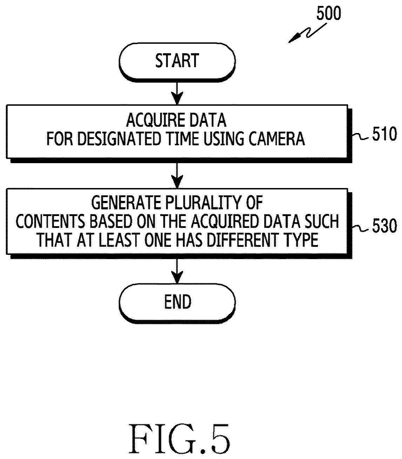

FIG. 5 is a diagram 500 illustrating a method of generating a plurality of contents according to an embodiment. At least one of components of the electronic device illustrated in FIG. 5 may be identical or similar to at least one of the components of the electronic device illustrated in FIG. 1 through FIG. 4, and redundant descriptions shall be omitted.

Referring to operation 510, the electronic device (e.g., the electronic device 300 of FIG. 3) according to an embodiment may acquire data for a designated time using a camera (e.g., the camera 310 of FIG. 3).

According to an embodiment, the processor (e.g., the processor 350 of FIG. 3) may cause the camera 310 to acquire at least one of image related data and video related data according to the designated time. For example, if the length of the designated time is a first length (e.g., less than 15 seconds), the processor 350 may cause the camera 310 to acquire the image related data. As another example, if the length of the designated time is a second length (e.g., 15 seconds or more), the processor 350 may cause the camera 310 to acquire image related data and video related data. In an embodiment, the processor 350 may generate contents of different types (e.g., a panoramic photo, a moving photo, or a slow motion video) according to the length (e.g., the first length or the second length) of the designated time.

According to an embodiment, if satisfying a designated condition (e.g., an expression of the subject, a gesture of the subject, a movement of the subject and an aesthetic criterion), the processor (e.g., the processor 350 of FIG. 3) may cause the camera 310 to acquire at least one data (e.g., image data or video data) among data of different types (e.g., image data and video data). In an embodiment, the processor 350 may set the data acquisition condition of the camera 310 to recognizing a designated expression (e.g., a smiling expression) of the subject (e.g., a person or an animal). In an embodiment, the processor 350 may set the data acquisition condition of the camera 310 to recognizing a designated gesture (e.g., a hand gesture) of the subject (e.g., a person or an animal). In an embodiment, the processor 350 may set the data acquisition condition of the camera 310 to changing a movement of the subject (e.g., a person or an animal) over a designated change rate (e.g., moving from one location to another location). In an embodiment, the processor 350 may set the data acquisition condition of the camera 310 to at least one criterion of frame clarity, exposure, colorfulness, composition and expression. In an embodiment, the processor 350 may set the data acquisition condition to satisfying a photographing environment (e.g., illumination). The above-described data acquisition condition may be set according to at least one of automatic setting of the processor 350, setting based on learning of the processor 350, or setting by the user.

According to an embodiment, if acquiring at least one of the image data and the video data, the processor (e.g., the processor 350 of FIG. 3) may perform operation 530.

Referring to operation 530, the electronic device (e.g., the electronic device 300 of FIG. 3) according to an embodiment may generate a plurality of contents based on the acquired data. In an embodiment, the electronic device 300 may generate at least one of the plurality of the contents as a content of a different type (e.g., a panoramic photo, a moving photo, or a slow motion video).

According to an embodiment, the processor (e.g., the processor 350 of FIG. 3) may generate a plurality of contents (e.g., a panoramic photo and a moving photo) based on the image data acquired for the time of the first length (e.g., less than 15 seconds). In an embodiment, the processor 350 may generate the plurality of the contents (e.g., a panoramic photo, a moving photo, and a slow motion video) based on the video data acquired for the time of the second length (e.g., 15 seconds or more).

According to an embodiment, the processor (e.g., the processor 350 of FIG. 3) may generate a plurality of contents (e.g., a panoramic photo, a moving photo or a slow motion video) based on image data or video data satisfying at least one of the designated expression (e.g., a smiling expression), the designated gesture (e.g., a hand gesture), and the designated change rate (moving from one location to another location) of the subject (e.g., a person or an animal).

According to an embodiment, the processor (e.g., the processor 350 of FIG. 3) may arrange the plurality of the contents (e.g., a panoramic photo, a moving photo, a slow motion video) generated according to the above-described operation on a display (e.g., the display 370 of FIG. 3). In this case, the processor 350 may arrange a content of a different type (e.g., a slow motion video) in at least one display area of a plurality of display areas of the display 370. In addition, the processor 350 may arrange a content of a different type (e.g., a moving photo) from the contents of the other types in other display area than the at least one display area of the plurality of the display areas of the display 370.

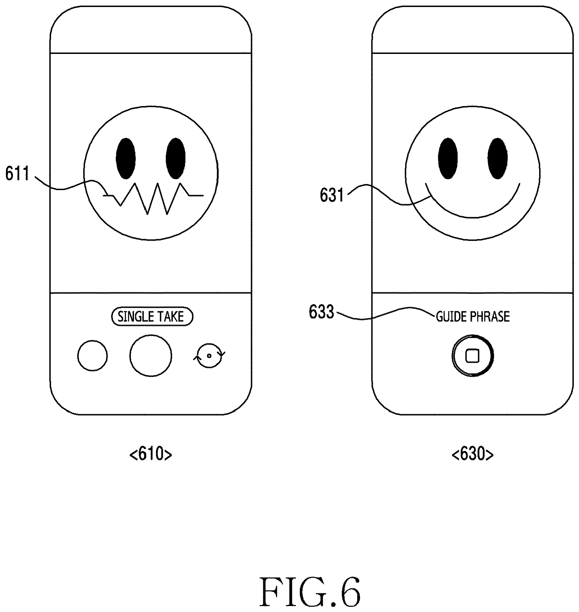

FIG. 6 is a diagram illustrating a user interface outputted on a display of an electronic device according to an embodiment. At least one of components of the electronic device illustrated in FIG. 6 may be identical or similar to at least one of the components of the electronic device illustrated in FIG. 1 through FIG. 4, and redundant descriptions shall be omitted.

Referring to FIG. 6, if performing a photographing function using a camera (e.g., the camera 310 of FIG. 3), the electronic device (e.g., the electronic device 300 of FIG. 3) according to an embodiment may output user interfaces corresponding to a state <610> and a state <630> on a display (e.g., the display 370 of FIG. 3) screen.

Referring to the state <610>, the electronic device (e.g., the electronic device 300 of FIG. 3) according to an embodiment may capture a subject 611 according to a designated photographing mode (e.g., a single take mode) of a camera (e.g., the camera 310 of FIG. 3). In an embodiment, the electronic device 300 may output the captured subject 611 through the display (e.g., the display 370 of FIG. 3) screen. In this case, the electronic device 300 may recognize at least one of an expression, a gesture, and a movement change rate of the subject 611. As another example, the electronic device 300 may recognize a shooting scene (e.g., a background without a moving subject) itself as well as the subject 611.

Referring to the state <630>, if the subject 611 does not satisfy a designated condition (e.g., a designated expression, a designated gesture and a designated movement change rate) in the state <610>, the electronic device (e.g., the electronic device 300 of FIG. 3) according to an embodiment may output a guide phrase 633 related to the designated condition (e.g., "Smile", "Raise your hand", "Jump more than 1 m", or "Move slowly") on display (e.g., the display 370 of FIG. 3) screen. Hence, the electronic device 300 may recognize and capture the subject 631 which satisfies the designated condition (e.g., a designated expression, a designated gesture and a designated movement change rate) in the state <630>. In an embodiment, the electronic device 300 may acquire data of different types (e.g., image data and video data) related to the subject 631 satisfying the designated condition (e.g., a designated expression, a designated gesture and a designated movement change rate). As another example, the electronic device 300 may store data per scene projected on the camera 310 although the designated condition (e.g., an expression of a subject, a gesture of a subject, a movement of a subject and an aesthetic criterion) is not satisfied. For example, if satisfying the photographing environment (e.g., illuminance), the electronic device 300 may store data of different types (e.g., image data and video data).

According to various embodiments, the electronic device (e.g., the electronic device 300 of FIG. 3) may output the guide phrase 633 related to the designated condition of the subject 631 on the display (e.g., the display 370 of FIG. 3) screen in the state <630> according to detailed classification (e.g., at least one face, a baby, a dog, a cat, an animal, a beach, sky, mountain, sunset, and sunrise) of the subject 611 in the state <610>. As another example, the electronic device 300 may output on the screen of the display 370 the guide text 633 related to the photographing environment (e.g., illumination) as well as the subject 611.

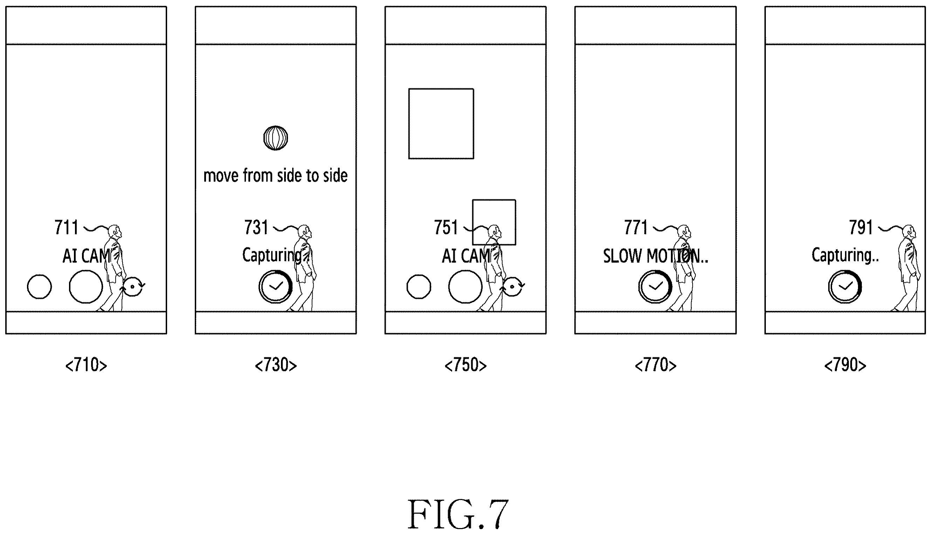

FIG. 7 is a diagram illustrating user interfaces output on a display of an electronic device according to an embodiment. At least one of components of the electronic device illustrated in FIG. 7 may be identical or similar to at least one of the components of the electronic device illustrated in FIG. 1 through FIG. 4, and redundant descriptions shall be omitted.

Referring to FIG. 7, if performing a photographing function (e.g., a photographing function according to a single take mode) using a camera (e.g., the camera 310 of FIG. 3), the electronic device (e.g., the electronic device 300 of FIG. 3) according to an embodiment may output user interfaces corresponding to a state <710>, a state <730>, a state <750>, a state <770> and a state <790> on a display (e.g., the display 370 of FIG. 3) screen.

Referring to the state <710>, the electronic device (e.g., the electronic device 300 of FIG. 3) according to an embodiment may capture a subject 711 according to a designated photographing mode (e.g., a single take mode) of the camera (e.g., the camera 310 of FIG. 3). In an embodiment, the electronic device 300 may output the captured subject 711 through the display (e.g., the display 370 of FIG. 3) screen. In an embodiment, the electronic device 300 may recognize at least one of an expression, a gesture and a movement change rate, and a movement speed of the subject 711. As another example, the electronic device 300 may recognize a shooting environment (e.g., illumination).

Referring to the state <730>, the electronic device (e.g., the electronic device 300 of FIG. 3) according to an embodiment may acquire data (e.g., image data) related to a moving subject 731. In an embodiment, the electronic device 300 may generate a content of any one type (e.g., a still photo) based on the acquired data (e.g., image data).

In an embodiment, the electronic device 300 may output a guide phrase (e.g., "Move the smartphone to the right") to the user on the display (e.g., the display 370 of FIG. 3) screen to adjust a view direction of the camera (e.g., the camera 310 of FIG. 3) according to the moving subject 731.

Referring to the state <750>, the electronic device (e.g., the electronic device 300 of FIG. 3) according to an embodiment may track and recognize a subject 751 which is continuously moving. In an embodiment, the user may adjust the view direction of the camera (e.g., the camera 310 of FIG. 3) according to the continuously moving subject 751.

Referring to the state <770>, the electronic device (e.g., the electronic device 300 of FIG. 3) according to an embodiment may acquire data (e.g., video data) related to a continuously moving subject 771. In an embodiment, the electronic device 300 may generate a content of any one type (e.g., a slow motion video) based on the acquired data (e.g., video data). In an embodiment, if the content of any one type (e.g., a slow motion video) is generated, the electronic device 300 may output the content (e.g., a slow motion video) generation on a display area of the display (e.g., the display 370 of FIG. 3).

Referring to the state <790>, the electronic device (e.g., the electronic device 300 of FIG. 3) according to an embodiment may acquire data (e.g., image data) related to a subject 791 which is continuously moving. In an embodiment, the electronic device 300 may generate a content of any one type (e.g., a moving photo) by connecting the data (e.g., image data) acquired in the state <730> with the data (e.g., image data) acquired in the state <730>.

According to various embodiments, the electronic device (e.g., the electronic device 300 of FIG. 3) may generate various contents such as a best photo (e.g., a photo satisfying at least one of a designated expression, a gesture, a movement change rate, an aesthetic criterion and a shooting condition), a wide photo (e.g., a photo taken through a wide-angle lens) and a rewinding video of a designated speed (e.g., a multiple speed faster than a playback speed of an original video) played from a shooting end point to a shooting start point in at least one photographing of the state <710> through the state <790>.

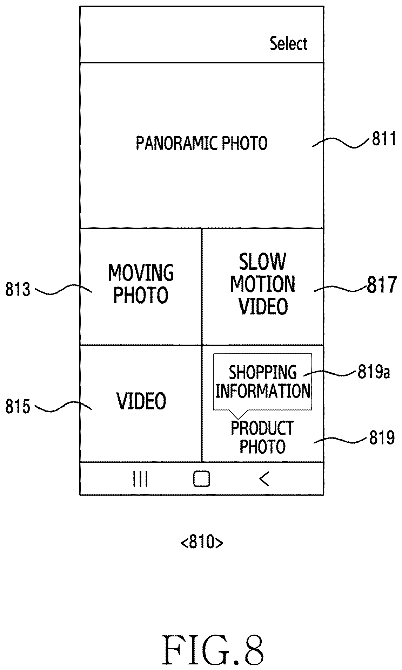

FIG. 8 is a diagram illustrating a user interface outputted on a display of an electronic device according to an embodiment. At least one of components of the electronic device illustrated in FIG. 8 may be identical or similar to at least one of the components of the electronic device illustrated in FIG. 1 through FIG. 4, and redundant descriptions will be omitted.

Referring to a state <810>, the electronic device (e.g., the electronic device 300 of FIG. 3) according to an embodiment may arrange a plurality of contents 811, 813, 815, 817, and 819 generated by a processor (e.g., the processor 350 of FIG. 3) in a plurality of display areas of a display (e.g., the display 370 of FIG. 3). For example, the display 370 may display a panoramic photo 811 as a main content in some display area (e.g., the top) of the plurality of the display areas, and display a moving photo 813, a video 815, a slow motion video 817 and a product photo 819 as sub contents on other display areas (e.g., the bottom) than some display area of the plurality of the display areas.

According to an embodiment, the electronic device (e.g., the electronic device 300 of FIG. 3) may display an information value (e.g., an Internet address) related to the product photo 819 on the corresponding photo. For example, if the product photo 819 is a bag, the electronic device 300 may display shopping information 819a related to the bag in some area of the product photo 819. In an embodiment, if touching the shopping information 819a of the product photo 819 outputted on the display (e.g., the display 370 of FIG. 3) screen, the user may identify an Internet screen including the shopping information 819a.

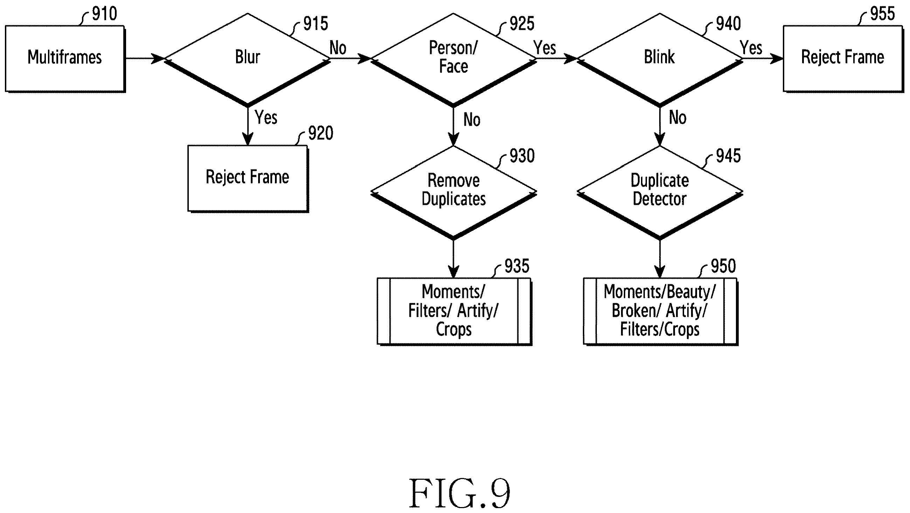

FIG. 9 is a diagram illustrating a data extraction method of an electronic device according to an embodiment. At least one of components of the electronic device illustrated in FIG. 9 may be identical or similar to at least one of the components of the electronic device illustrated in FIG. 1 through FIG. 4, and redundant descriptions shall be omitted.

Referring to FIG. 9, the electronic device (e.g., the electronic device 300 of FIG. 3) according to an embodiment may store data satisfying a designated condition (e.g., an aesthetic condition) among data (e.g., image data, video data) acquired using a camera (e.g., the camera 310 of FIG. 3) in a memory (e.g., the memory 330 of FIG. 3).

Referring to operation 910, the electronic device (e.g., the electronic device 300 of FIG. 3) according to an embodiment may capture a subject using the camera (e.g., the camera 310 of FIG. 3). For example, the processor (e.g., the processor 350 of FIG. 3) may select a plurality of frames of the captured subject according to operation 915, operation 925, and operation 940.

Referring to operation 915, the processor (e.g., the processor 350 of FIG. 3) according to an embodiment may determine whether the plurality of the frames includes a blurred frame. For example, if the plurality of the frames includes the blurred frame, the processor 350 may perform operation 920. As another example, if the plurality of the frames does not include the blurred frame, the processor 350 may perform operation 925.

Referring to operation 920, if determining that the plurality of the frames includes the blurred frame, the processor (e.g., the processor 350 of FIG. 3) according to an embodiment may store the blurred frame in the memory (e.g., the memory 330 of FIG. 3).

Referring to operation 925, the processor (e.g., the processor 350 of FIG. 3) according to an embodiment may determine whether the frame not blurred includes a designated subject (e.g., a person or a face). For example, if the frame not blurred includes no designated subject (e.g., a person or a face), the processor 350 may perform operation 930. As another example, if the frame not blurred includes the designated subject (e.g., a person or a face), the processor 350 may perform operation 940.

Referring to operation 930, if determining that the frame not blurred includes no designated subject (e.g., a person or a face), the processor (e.g., the processor 350 of FIG. 3) according to an embodiment may remove a duplicate frame. Also, if removing the duplicate frame, the processor 350 may perform operation 935.

Referring to operation 935, the processor (e.g., the processor 350 of FIG. 3) according to an embodiment may perform editing such as filters, artify, and crops on the frame including no designated subject (e.g., a person or a face).

Referring to operation 940, the processor (e.g., the processor 350 of FIG. 3) according to an embodiment may determine whether the frame including the designated subject (e.g., a person or a face) includes a blink of the designated subject (e.g., a person or a face). As an example, the processor 350 may perform operation 945, if the frame having the designated subject (e.g., a person or a face) has no blink of the designated subject (e.g., a person or a face). As another example, the processor 350 may perform operation 955, if the frame including the designated subject (e.g., a person or a face) has the blink of the designated subject (e.g., a person or a face).

Referring to operation 955, if determining that the frame including the designated subject (e.g., a person or a face) has the blink of the designated subject (e.g., a person or a face), the processor (e.g., the processor 350 of FIG. 3) according to an embodiment may not store the frame including the blink of the designated subject (e.g., a person or a face) in the memory (e.g., the memory 330 of FIG. 3).

Referring to operation 945, if the frame including the designated subject (e.g., a person or a face) has no blink of the designated subject (e.g., a person or a face), the processor (e.g., the processor 350 of FIG. 3) according to an embodiment may remove a duplicate frame. Also, if removing the duplicate frame, the processor 350 may perform operation 950.

Referring to operation 950, the processor (e.g., the processor 350 of FIG. 3) according to an embodiment may perform editing such as beauty, broken, artify, artify, and crops on the frame including no blink of the designated subject (e.g., a person or a face).

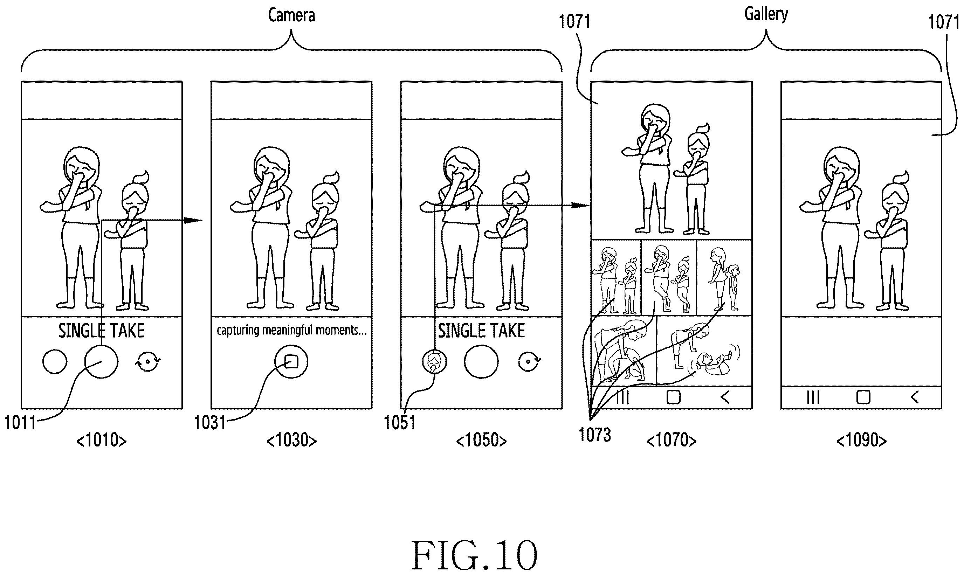

FIG. 10 is a diagram illustrating user interfaces outputted on a display of an electronic device according to an embodiment.

Referring to FIG. 10, if perform a photographing function (e.g., a photographing function based on a single take mode) using a camera (e.g., the camera 310 of FIG. 3), the electronic device (e.g., the electronic device 300 of FIG. 3) according to an embodiment may output user interfaces corresponding to a state <1010>, a state <1030>, a state <1050>, a state <1070>, and a state <1090> on a display (e.g., the display 370 of FIG. 3) screen. In an embodiment, if executing the photographing function of the camera 310, the electronic device 300 may output the user interfaces corresponding to the state <1010>, the state <1030>, and the state <1050> on the screen of the display 370. In an embodiment, if executing a photo album function of the camera 310 after the photographing function of the camera 310 is terminated, the electronic device 300 may output the user interfaces corresponding to the state <1070> and the state <1090> on the screen of the display 370.

Referring to the state <1010>, if receiving a first user input 1011 (e.g., shooting start), the electronic device (e.g., the electronic device 300 of FIG. 3) according to an embodiment may capture a subject in a designated photographing mode (e.g., a single take mode) of the camera (e.g., the camera 310 of FIG. 3). In an embodiment, the electronic device 300 may output the captured subject through the display (e.g., the display 370 of FIG. 3) screen. In an embodiment, the electronic device 300 may recognize at least one of an expression, a gesture and a movement change rate of the subject. As another example, the electronic device 300 may recognize a shooting environment (e.g., illumination).

Referring to the state <1030>, if receiving a second user input 1031 (e.g., shooting end), the electronic device (e.g., the electronic device 300 of FIG. 3) according to an embodiment may stop the designated photographing mode (e.g., a single take mode) of the camera (e.g., the camera 310 of FIG. 3). As another example, if a maximum photographing time (e.g., 15 seconds) elapses, the electronic device 300 may stop the designated photographing mode (e.g., a single take mode).

Referring to the state <1050>, if receiving a third user input 1051 (e.g., moving to a photo album), the electronic device (e.g., the electronic device 300 of FIG. 3) according to an embodiment may switch the display (e.g., the display 370 of FIG. 3) screen from a preview screen to a photo album screen. In an embodiment, if stopping the photographing according to the third user input 1051, if the subject satisfies at least one of a designated expression, a designated gesture and a designated movement change rate from the shooting start point to the shooting end point, the electronic device 300 may store data (e.g., image data, video data) of the subject according to the second user input 1231.

Referring to the state <1070>, if switching the display (e.g., the display 370 of FIG. 3) screen from the preview screen to the photo album screen according to the third user input 1051, the electronic device (e.g., the electronic device 300 of FIG. 3) according to an embodiment may display a plurality of contents 1071 and 1073 in the photo album screen. In an embodiment, the main content 1071 (e.g., a slow motion video) may be arranged on the top of the screen of the display 370. In addition, a plurality of sub contents 1073 (e.g., a panoramic photo, a moving photo) may be arranged at the bottom of the screen of the display 370.

Referring to the state <1090>, if the main content 1071 is selected (e.g., scrolled down) in the display (e.g., the display 370 of FIG. 3) screen of the state <1070>, the electronic device (e.g., the electronic device 300 of FIG. 3) according to an embodiment may display the main content 1071 on a full screen.

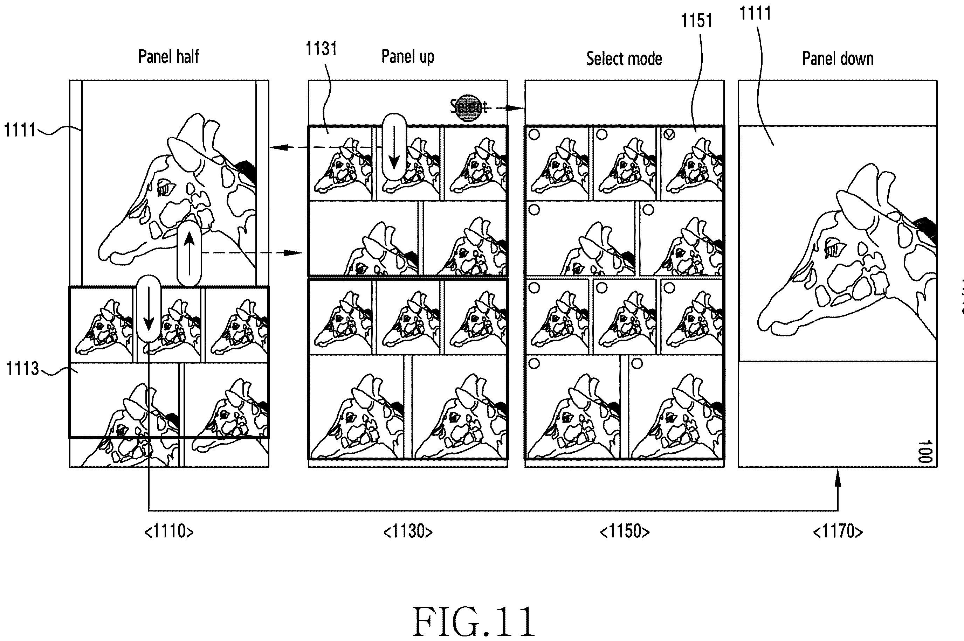

FIG. 11 is a diagram illustrating user interfaces outputted on a display of an electronic device according to an embodiment.

Referring to FIG. 11, the electronic device (e.g., the electronic device 300 of FIG. 3) according to an embodiment may output a plurality of contents (e.g., a panoramic photo, a moving photo, a slow motion video) generated by a processor (e.g., the processor 350 of FIG. 3) as user interfaces corresponding to a state <1110>, a state <1130>, a state <1150> and a state <1170> on a display (e.g., the display 370 of FIG. 3) screen.

Referring to the state <1110>, the electronic device (e.g., the electronic device 300 of FIG. 3) according to an embodiment may arrange a main content 1111 among the plurality of the generated contents at the top of the display (e.g., the display 370 of FIG. 3) screen. In an embodiment, the electronic device 300 may arrange sub contents 1113 among the plurality of the generated contents at the bottom of the screen of the display 370. In an embodiment, the electronic device 300 may set the screen area of the main content 1111 and the screen area of the sub contents 1113 in identical or similar rates, but the display area of the sub contents 1113 may be divided as many as the sub contents 1113.

Referring to the state <1130>, if the sub contents 1113 arranged at the bottom of the screen of the display (e.g., the display 370 of FIG. 3) is selected (e.g., scrolled up) in the state <1110>, the electronic device (e.g., the electronic device 300 of FIG. 3) according to an embodiment may display more sub contents 1131 on the screen.

Referring to the state <1150>, for example, if switching to a content selection mode (e.g., a select mode) in the state <1130>, the electronic device (e.g., the electronic device 300 of FIG. 3) according to an embodiment may store at least one of a plurality of contents 1151 in the photo album according to a user's selection. In an embodiment, if executing and terminating a photographing mode (e.g., a single take mode) using a camera (e.g., the camera 310 of FIG. 3), the electronic device 300 may store only the content desired by the user in the photo album by performing the content selection mode (e.g., a select mode).

Referring to the state <1170>, if the main content 1111 arranged on the top of the screen of the display (e.g., the display 370 of FIG. 3) is selected (e.g., scrolled down) in the state <1110>, the electronic device (e.g., the electronic device 300 of FIG. 3) according to an embodiment may display the main content 1111 on the full screen.

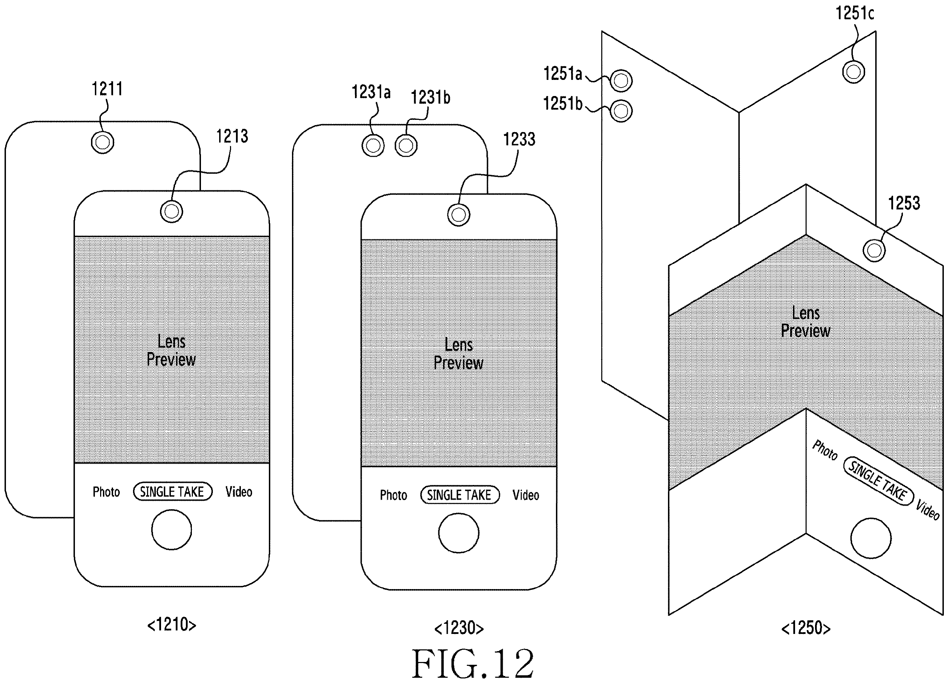

FIG. 12 is a diagram illustrating camera arrangement of an electronic device according to various embodiments

Referring to FIG. 12, the electronic device (e.g., the electronic device 300 of FIG. 3) according to various embodiments may generate a plurality of contents (e.g., a selfie photo, a panoramic photo, a moving photo, a slow motion video) corresponding to a state <1210>, a state <1230> and a state <1250> according to the number of cameras (e.g., the camera 310 of FIG. 3).

Referring to the state <1210>, in various embodiments, the electronic device (e.g., the electronic device 300 of FIG. 3) generate the plurality of the contents (e.g., a selfie photo, a panoramic photo, a moving photo, a slow motion video) based on data of different types (e.g., image data, video data) acquired for a designated time through a plurality of cameras 1211 and 1213 (e.g., one front camera, one rear camera) disposed to face different directions or at different positions. In this case, the electronic device 300 may obtain the data (e.g., image data, video data) from all of the plurality of the cameras 1211 and 1213 (e.g., one front camera, one rear camera) in the same time zone of the designated time. In various embodiments, the electronic device 300 may display the plurality of the generated contents (e.g., a selfie photo, a panoramic photo, a moving photo, a slow motion video) through a display (e.g., the display 370 of FIG. 3) screen.

Referring to the state <1230>, the electronic device (e.g., the electronic device 300 of FIG. 3) according to various embodiments may generate a plurality of contents (e.g., a selfie photo, a panoramic photo, a moving photo, a slow motion video) based on data of different types (e.g., image data, video data) acquired for a designated time through a plurality of cameras 1231a, 1231b, and 1233 (e.g., one front camera, two rear cameras) facing different directions or disposed at different positions. In this case, the electronic device 300 may obtain the data (e.g., image data, video data) from all of the plurality of the cameras 1231a, 1231b, and 1233 (e.g., one front camera, two rear cameras) in the same time zone of the designated time. In various embodiments, the electronic device 300 may display the plurality of the generated contents (e.g., a selfie photo, a panoramic photo, a moving photo, a slow motion video) through the display (e.g., the display 370 of FIG. 3) screen.

Referring to the state <1250>, the electronic device (e.g., the electronic device 300 of FIG. 3) according to various embodiments may be a foldable electronic device (e.g., a foldable phone) including a foldable display. In various embodiments, the electronic device 300 may generate a plurality of contents (e.g., a selfie photo, a panoramic photo, a moving photo, a slow motion video) based on data of different types (e.g., image data, video data) acquired for a designated time through a plurality of cameras 1251a, 1251b, 1251c, and 1253 (e.g., one front camera, three rear cameras) disposed to face different directions. In this case, the electronic device 300 may obtain the data (e.g., image data, video data) from all of the plurality of the cameras 1251a, 1251b, 1251c, and 1253 (e.g., one front camera, three rear cameras) facing different directions or disposed at different positions in the same time zone of the designated time. In various embodiments, the electronic device 300 may display the plurality of the generated contents (e.g., a selfie photo, a panoramic photo, a moving photo, a slow motion video) through the display (e.g., the display 370 of FIG. 3) screen.

According to various embodiments, the electronic device (e.g., the electronic device 300 of FIG. 3) may generate a plurality of contents (e.g., a selfie photo, a panoramic photo, a moving photo, a slow motion video) based on data of different types (e.g., image data, video data) acquired for a designated time through a plurality of cameras including an external accessory (e.g., a smartphone gimbal).

As another example, the electronic device 300 may generate a plurality of contents (e.g., a selfie photo, a panoramic photo, a moving photo, a slow motion video) based on data of different types (e.g., image data, video data) acquired for a designated time through a plurality of cameras including a plurality of camera-enabled devices (e.g., other smart phones connected via Wi-Fi Direct) connected.

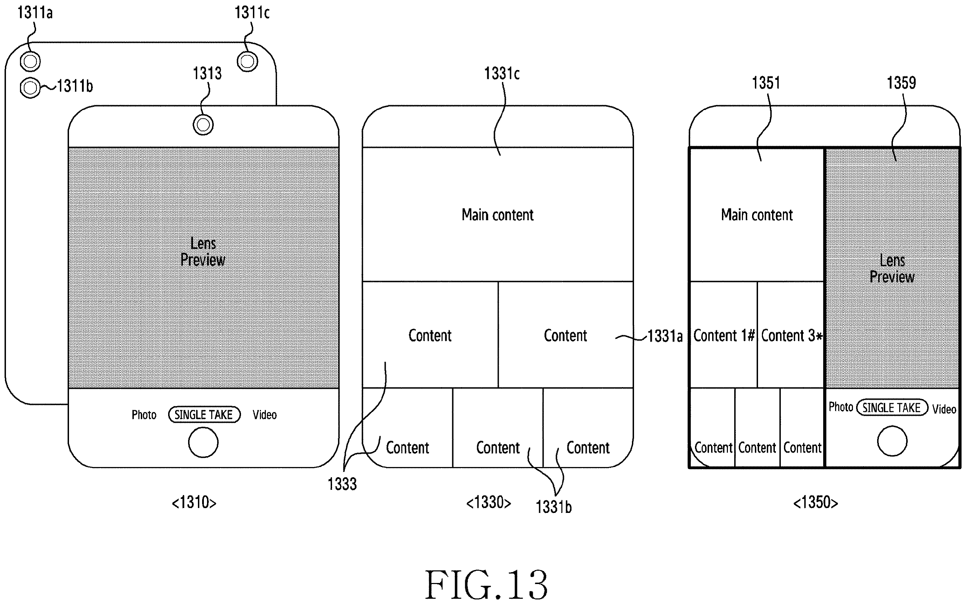

FIG. 13 is a diagram illustrating a camera arrangement of an electronic device and user interfaces outputted to a display according to various embodiments.

Referring to FIG. 13, the electronic device (e.g., the electronic device 300 of FIG. 3) according to various embodiments may acquire data (e.g., image data, video data) through a plurality of cameras as shown in a state <1310>, and arrange a plurality of contents (e.g., a selfie photo, a panoramic photo, a moving photo, a slow motion video), as shown in a state <1330> and a state <1350>.

Referring to the state <1310>, in various embodiments, the electronic device (e.g., the electronic device 300 of FIG. 3) may acquire data of different types (e.g., image data, video data) for a designated time through a plurality of cameras 1311a, 1311b, 1311c, and 1313 (e.g., one front camera, three rear cameras) facing different directions or disposed at different positions. In various embodiments, if generating a plurality of contents (e.g., a selfie photo, a panoramic photo, a moving photo, a slow motion video) based on data of different types (e.g., image data, video data), the electronic device 300 may output a display (e.g., the display 370 of FIG. 3) screen of one of the state <1330> and the state <1350>.

Referring to the state <1330>, the electronic device (e.g., the electronic device 300 of FIG. 3) according to various embodiments may arrange a main content 1331c captured by one camera (e.g., 1311c) of the plurality of the cameras 1311a, 1311b, 1311c and 1313 facing different directions or disposed at different positions on the top display area among a plurality of display areas of the display (e.g., the display 370 of FIG. 3). In various embodiments, the electronic device 300 may arrange sub content 1331a, 1331b, and 1333 captured by the plurality of the cameras 1311a, 1311b, 1311c and 1313 at the bottom display area of the plurality of the display areas of the display 370.

Referring to the state <1350>, the electronic device (e.g., the electronic device 300 of FIG. 3) according to various embodiments may arrange a plurality of contents 1351 on a left area of the display (e.g., the display 370 of FIG. 3) screen areas. In various embodiments, the electronic device 300 may output a preview screen 1359 according to a photographing mode (e.g., a single take mode) of the camera 1311a, 1311b, 1311c, or 1313 on a right area of the screen area of the display 370. In various embodiments, the electronic device 300 may allow the user to identify the plurality of the contents 1351 captured through the plurality of the cameras 1311a, 1311b, 1311c, or 1313 in real time and to continuously identify the preview screen 1359 according to the photographing mode (e.g., a single take mode).

An electronic device according to an embodiment may include at least one camera (e.g., the camera 310 of FIG. 3), and a processor (e.g., the processor 350 of FIG. 3) operatively coupled to the at least one camera 310, the processor 350 may acquire data for a designated time using the at least one camera, and generate a plurality of contents based on the acquired data, and at least one content of the plurality of the contents many have a different type.

According to an embodiment, a memory (e.g., the memory 330 of FIG. 3) may be further included, and the processor may be configured to cause the memory 330 to separately store image related data and video related data among the acquired data at the same time for the designated time.

According to an embodiment, the processor 350 may be configured to cause the at least one camera 310 to acquire at least one of image related data and video related data according to the designated time.

According to an embodiment, the processor 350 may be configured to generate at least one content of the plurality of the contents, if at least one of a subject of a designated expression, a subject of a designated gesture, a designated shooting condition, or a designated shooting environment is recognized in the acquired data.

According to an embodiment, if a movement of a subject in the acquired data changes over a designated change rate within any one period of the designated time, the processor 350 may be configured to generate at least one content of the plurality of the contents.

According to an embodiment, the processor 350 may be configured to display an information value related to a recognized subject or a captured scene in at least one content of the plurality of the contents on the at least one content.

According to an embodiment, the processor 350 may be configured to generate at least one content of the plurality of the contents by reflecting a designated expression of a subject and a designated gesture of a subject in the acquired data, based on at least one pre-generated.

According to an embodiment, the processor 350 may be configured to generate at least one content of the plurality of the contents by reflecting preference of an image or a video analyzed from an application program related to storing the image or the video.

According to an embodiment, a display (e.g., the display 370 of FIG. 3) may be further included, and the processor 350 may be configured to display the at least one content having the different type among the plurality of the contents on at least one display area of a plurality of display areas of the display or to display contents of the same type among the plurality of the contents on a plurality of display areas of the display.

According to an embodiment, a display 370 may be further included, wherein the at least one camera 310 may include a plurality of cameras (e.g., 1211, 1213, 1231a, 1231b, 1233, 1251a, 1251b, 1251c, or 1253 of FIG. 12) disposed at different positions, and the processor 350 may be configured to display a plurality of contents generated based on data obtained from the plurality of the cameras (e.g., 1211, 1213, 1231a, 1231b, 1233, 1251a, 1251b, 1251c, or 1253 of FIG. 12) on a plurality of display areas of the display.

A method (e.g., 500 of FIG. 5) for generating a plurality of contents according to an embodiment may include acquiring data (e.g., operation 510 of FIG. 5) for a designated time using at least one camera 310, and generating a plurality of contents (e.g., operation 530 of FIG. 5) based on the acquired data, and at least one content of the plurality of the contents may have a different type.

According to an embodiment, separately storing image related data and video related data among the acquired data in a memory 330 at the same time for the designated time may be included.

According to an embodiment, acquiring at least one of image related data and video related data using the at least one camera according to the designated time may be included.

According to an embodiment, generating at least one content of the plurality of the contents, if at least one of a subject of a designated expression, a subject of a designated gesture, a designated shooting condition, or a designated shooting environment is recognized in the acquired data may be included.

According to an embodiment, if a movement of a subject in the acquired data changes over a designated change rate within any one period of the designated time, generating at least one content of the plurality of the contents may be included.

According to an embodiment, displaying an information value related to a recognized subject or a captured scene in at least one content of the plurality of the contents on the at least one content may be included.

According to an embodiment, generating at least one content of the plurality of the contents by reflecting a designated expression of a subject and a designated gesture of a subject in the acquired data, based on at least one pre-generated may be included.

According to an embodiment, generating at least one content of the plurality of the contents by reflecting preference of an image or a video analyzed from an application program related to storing the image or the video may be included.

According to an embodiment, displaying the at least one content having the different type among the plurality of the contents on at least one display area of a plurality of display areas of the display 370 or displaying contents of the same type among the plurality of the contents on a plurality of display areas of the display may be included.

According to an embodiment, if the at least one camera 310 is a plurality of cameras (e.g., 1211, 1213, 1231a, 1231b, 1233, 1251a, 1251b, 1251c, or 1253 of FIG. 12) disposed at different positions or a camera of an external electronic device, displaying a plurality of contents generated based on data obtained from the plurality of the cameras (e.g., 1211, 1213, 1231a, 1231b, 1233, 1251a, 1251b, 1251c, or 1253 of FIG. 12) disposed at the different positions or the camera of the external electronic device on a plurality of display areas of the display 370 may be included.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the monitoring unit 350). For example, a processor(e.g., the processor 920) of the machine (e.g., the monitoring 350) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one camera; and
a processor operatively coupled to the at least one camera;
wherein the processor,
acquires data for a designated time using the at least one camera, and
generates a plurality of contents based on the acquired data,
wherein at least one content of the plurality of the contents has a different type.

2. The electronic device of claim 1, further comprising:
a memory;
wherein the processor is configured to cause the memory to separately store image related data and video related data among the acquired data at the same time for the designated time.

3. The electronic device of claim 1, wherein the processor is configured to cause the at least one camera to acquire at least one of image related data and video related data according to the designated time.

4. The electronic device of claim 1, wherein the processor is configured to generate at least one content of the plurality of the contents, if at least one of a subject of a designated expression, a subject of a designated gesture, a designated shooting condition, or a designated shooting environment is recognized in the acquired data.

5. The electronic device of claim 1, wherein, if a movement of a subject in the acquired data changes over a designated change rate within any one period of the designated time, the processor is configured to generate at least one content of the plurality of the contents.

6. The electronic device of claim 1, wherein the processor is configured to display an information value related to a recognized subject or a captured scene in at least one content of the plurality of the contents on the at least one content.

7. The electronic device of claim 1, further comprising:
a display;
wherein the processor is configured to display the at least one content having the different type among the plurality of the contents on at least one display area of a plurality of display areas of the display or to display contents of the same type among the plurality of the contents on a plurality of display areas of the display.

8. The electronic device of claim 1, further comprising:
a display;
wherein the at least one camera comprises,
a plurality of cameras disposed at different positions; and
the processor is configured to display a plurality of contents generated based on data obtained from the plurality of the cameras on a plurality of display areas of the display.

9. A method for generating a plurality of contents, comprising:
acquiring data for a designated time using at least one camera; and
generating a plurality of contents based on the acquired data,
wherein at least one content of the plurality of the contents has a different type.

10. The method of claim 9, comprising:
separately storing image related data and video related data among the acquired data in a memory at the same time for the designated time.

11. The method of claim 9, comprising:
acquiring at least one of image related data and video related data using the at least one camera according to the designated time.

12. The method of claim 9, comprising:
generating at least one content of the plurality of the contents, if at least one of a subject of a designated expression, a subject of a designated gesture, a designated shooting condition, or a designated shooting environment is recognized in the acquired data.

13. The method of claim 9, comprising:
if a movement of a subject in the acquired data changes over a designated change rate within any one period of the designated time, generating at least one content of the plurality of the contents.

14. The method of claim 9, comprising:
displaying the at least one content having the different type among the plurality of the contents on at least one display area of a plurality of display areas of the display or displaying contents of the same type among the plurality of the contents on a plurality of display areas of the display.

15. The method of claim 9, comprising:
if the at least one camera is a plurality of cameras disposed at different positions or a camera of an external electronic device, displaying a plurality of contents generated based on data obtained from the plurality of the cameras disposed at the different positions or the camera of the external electronic device on a plurality of display areas of the display.
